Europäisches Patentamt

European Patent Office

Office européen des brevets

(19)

(11) **EP 0 961 154 A1**

(12) ## DEMANDE DE BREVET EUROPEEN

(43) Date de publication:
**01.12.1999 Bulletin 1999/48**

(51) Int Cl.⁶: **G02F 1/01**, G02F 1/035

(21) Numéro de dépôt: **99400760.7**

(22) Date de dépôt: **29.03.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **30.03.1998 FR 9803901**

(71) Demandeur: **FRANCE TELECOM**
**75015 Paris (FR)**

(72) Inventeurs:
• **Bosc, Dominique**
**22300 Lannion (FR)**

• **Benech, Pierre**
**38000 Grenoble (FR)**
• **Tedjini, Smail**
**26000 Valence (FR)**
• **Morand, Alain**
**38000 Grenoble (FR)**

(74) Mandataire: **Texier, Christian**
**Cabinet Regimbeau,**
**26, Avenue Kléber**
**75116 Paris (FR)**

(54) **Modulateur électro-optique intégré hybride du type à effet Pockels**

(57) Modulateur électro-optique à effet Pockels comportant un guide optique à coeur (2) en un matériau amorphe minéral, sur lequel est superposée une structure qui comporte deux couches (3, 6) formant électrode entre lesquelles est interposé un polymère (4) électro-optique, caractérisé en ce que ladite structure est directement superposée au matériau de coeur (2) du guide optique. Les transitions entre les zones actives et passives sont avantageusement adaptées pour minimiser les pertes.

## FIG. 1

## Description

La présente invention est relative aux modulateurs électro-optiques.

Plus particulièrement, l'invention propose des modulateurs électro-optiques rapides, c'est-à-dire permettant des fréquences de modulation de l'ordre de 1MHz ou supérieures.

Ce type de modulation est notamment avantageusement utilisé dans le domaine des télécommunications optiques pour transformer un signal électrique en un signal optique modulé.

Une telle modulation est obtenue soit par une modulation interne du laser d'émission, soit par une modulation externe. Cette dernière peut être effectuée par des composants discrets ou des composants optiques intégrés, qui exploitent différents effets physiques tels que par exemple, les effets acousto-optiques, l'électro-absorption ou encore les effets électro-optiques. Parmi ces derniers le plus couramment utilisé est l'effet Pockels transverse électrique qui permet de moduler l'indice de réfraction du milieu de propagation proportionnellement au champ électrique par le biais d'un coefficient électro-optique. Celui-ci dépend des propriétés optiques non linéaires du matériau employé. Ces matériaux sont dits actifs car leur indice varie sensiblement avec le champ électrique auquel ils sont soumis.

L'effet Pockels peut être obtenu avec différents types de matériaux, et notamment avec des guides réalisés soit avec :

- des semi-conducteurs adaptés
- des cristaux non centro-symétriques minéraux ou organiques
- des polymères électro-optiques
- des matériaux passifs associés à des matériaux électro-optiques

L'invention concerne quant à elle des modulateurs électro-optiques par effet Pockels, dont les guides sont réalisés à partir de matériaux passifs associés à des matériaux électro-optiques.

L'avantage de ce type de structure est qu'elle peut être connectée facilement à d'autres composants passifs sur une plate-forme de circuits intégrés optiques.

Pour des exemples de structures de modulateurs à effet Pockels en matériaux passifs, on pourra avantageusement se référer aux différentes publications suivantes :

M. Wilkinson et al. Electronics Letters, vol.27(11), p.979, (1991) ;
R.A. Hill et al. Proceedings OFC'96 Technical Digest, WL1, P.166, (1996) ;
G. Fawcett et al. Electronics Letters vol.28 (11) p. 985, (1992).

Habituellement, ces structures de modulateurs sont constituées par un guide passif réalisé dans la silice ou dans des verres traités par échange ionique sur lequel est déposé un film de polymère. Elles exploitent le couplage par onde évanescente entre le coeur et le polymère, à des longueurs d'onde bien précises, celui-ci ayant un indice largement au-dessus du matériau de coeur.

Toutefois, ces structures présentent des pertes très importantes à ces longueurs d'onde et la modulation se fait avec des niveaux de puissance faibles.

Le but de l'invention est de proposer un modulateur électro-optique du type précité qui ne présente pas cet inconvénient et qui permet une modulation de phase optique analogue à celles obtenues avec des coeurs en matériaux actifs, avec des pertes optiques faibles.

Un autre but de l'invention est de proposer un procédé simple à mettre en oeuvre pour la fabrication d'un tel modulateur.

Ainsi, l'invention propose un modulateur électro-optique à effet Pockels comportant un guide optique à coeur en un matériau amorphe minéral, sur lequel est superposée une structure qui comporte deux couches formant électrode entre lesquelles est interposé un polymère électro-optique, ladite structure étant directement superposée au matériau de coeur du guide optique, caractérisé en ce qu'il comporte une couche d'un matériau formant gaine optique qui s'étend sur le matériau de coeur, de part et d'autre de la structure comportant les deux couches formant électrode et le polymère électro-optique, et qui présente au voisinage de ladite structure des zones de transition dans lesquelles son épaisseur décroît jusqu'à l'électrode qui est superposée au matériau de coeur, le polymère électro-optique recouvrant ledit matériau formant gaine optique dans les zones de transition ainsi définies.

Un tel modulateur est en outre avantageusement complété par les différentes caractéristiques suivantes prises seules ou selon toutes leurs combinaisons techniquement possibles :

- le polymère électro-optique est recouvert d'une couche de protection d'indice inférieur à celui du coeur ;
- l'électrode qui est superposée au coeur du guide optique est en un matériau à la fois conducteur électrique et transparent à la longueur d'onde de fonctionnement
- ledit matériau est un matériau à base d'oxyde d'étain.
- la longueur selon laquelle la structure comportant les deux couches formant électrode et le polymère électro-optique est superposée au coeur est comprise entre 5 et 30 mm.

L'invention propose en outre un procédé pour la réalisation d'un modulateur électro-optique du type précité, caractérisé par les différentes étapes suivantes :

- on réalise une structure qui comporte un guide optique à coeur en un matériau amorphe minéral affleurant,
- on dépose sur cette structure une couche en un matériau destiné à constituer une gaine optique pour ledit coeur,
- on grave ladite couche à travers un masque,
- on dépose une électrode dans le fond de la zone gravée,
- on dépose un polymère électro-optique sur cette électrode et sur les bords de la zone gravée

Notamment, la gravure est avantageusement réalisée par plasma, le masque étant écarté par rapport à la gaine optique.

De préférence, pour écarter le masque par rapport à la gaine optique, on dispose des cales entre ledit masque et ladite gaine.

De façon avantageuse, alors, le polymère est déposé sur l'électrode et sur les zones de transition définies sur la gaine optique lors de la gravure.

Dans une autre variante encore, on met en oeuvre les différentes étapes suivantes :

- on réalise une structure qui comporte un guide optique à coeur en un matériau amorphe minéral affleurant,
- on dépose par plasma, sur ladite structure, une gaine optique en interposant, au droit de la zone où est destiné à se trouver le polymère électro-optique, un masque qui présente une partie pleine au droit de ladite zone,
- on dépose une électrode dans le fond de la cuvette ainsi obtenue,
- on dépose un polymère électro-optique sur cette électrode et sur les bords de la cuvette.

D'autres caractéristiques et avantages de l'invention ressortiront encore de la description qui suit. Cette description est purement illustrative et non limitative. Elle doit être lue en regard des dessins annexés sur lesquels :

- la figure 1 est une représentation schématique en coupe longitudinale d'un modulateur conforme à un mode de réalisation possible de l'invention ;
- la figure 2 est une représentation en coupe transversale du modulateur de la figure 1 ;
- la figure 3 est une représentation schématique en coupe longitudinale illustrant la réalisation de zones de transition sur la gaine optique de la structure illustrée sur les figures 1 et 2 ;
- les figures 4a à 4g illustrent différentes étapes pour l'obtention d'une structure à guide optique à coeur en un matériau amorphe minéral affleurant ;

- les figures 5 à 8 sont des graphes illustrant d'une structure conforme à un mode de réalisation possible de l'invention.

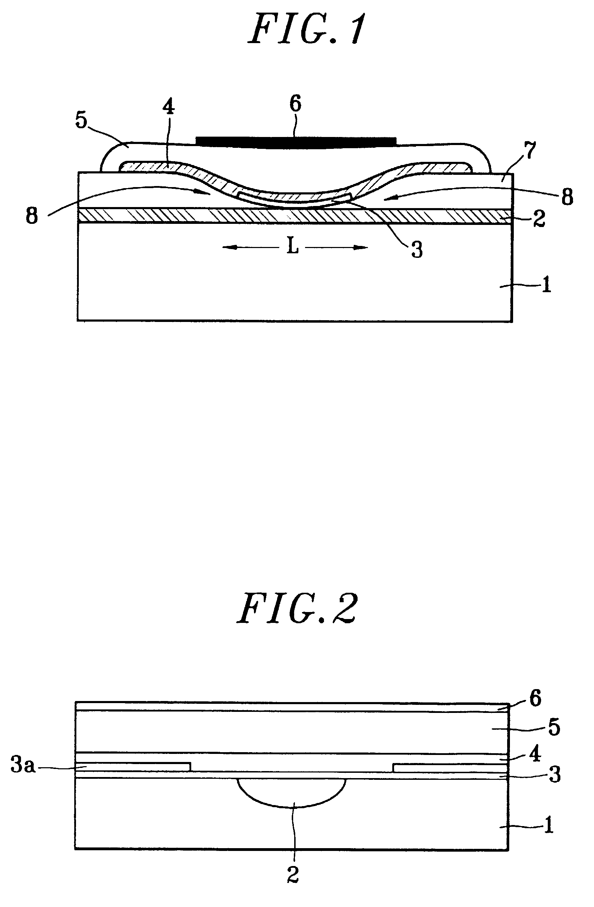

Le modulateur illustré sur les figures 1 et 2 comporte un substrat 1, dans lequel s'étend un coeur optique 2 affleurant.

Sur le coeur 2 est superposé, au niveau de la zone de modulation, une première électrode 3 transparente à la longueur d'onde de fonctionnement du composant, un polymère électro-optique bas indice 4, une couche de protection 5 et une deuxième électrode 6.

De part et d'autre de la zone de modulation, le coeur optique 2 est simplement recouvert d'une couche 7 de diélectrique de recouvrement.

La modulation par effet Pockels est réalisée en excitant la couche de polymère 4 en appliquant entre les électrodes 3 et 6 une tension destinée à générée un champ électrique E sur ladite couche 4. Les dipôles du polymère 4 ont à cet effet été préalablement orientés de façon à rendre ce matériau non centro-symétrique.

Le faisceau optique qui est guidé dans le coeur 2 se propage, au niveau de la zone de modulation, en partie dans le coeur 2 et en partie dans la couche de polymère 4.

Ainsi, le polymère 4 participe en quelque sorte au matériau de coeur, son épaisseur et son indice étant choisis à cet effet. On notera en particulier que l'efficacité de la modulation de la structure proposée est liée au fait que la majeure partie de l'énergie du mode qui se propage dans le guide atteint le polymère électro-optique 4, qui est soumis à un champ électrique et dont la modulation de l'indice dudit polymère 4 provoque une modulation de phase de l'onde optique.

Les matériaux constituants le substrat 1 et le coeur 2 peuvent être :

- pour le substrat 1, du verre minéral de tout type de composition ou bien de la silice déposée sur verre ou sur silicium par exemple ;
- pour le coeur 2, le verre de substrat ayant subi un échange ionique ou bien de la silice dopée avec de l'oxyde de germanium et d'autres dopants tels que bore phosphore ou fluor ou tout autre matériau passif permettant la création de guides monomodes.

Par exemple, le matériau du substrat est du verre en silice dopée P, B ou F ou encore en silice dopée $G_e O_2$ ; en variante, le substrat 1 peut être en verre de Menzel, le coeur 2 étant alors obtenu par échange ionique $Na^+/K^+$ ; en variante encore le substrat 1 peut être en des verres spéciaux permettant la création d'un coeur par échange $Na^+/Tl^+$.

Les matériaux des autres couches de la structure peuvent être les suivants :

- pour l'électrode 3 inférieure, un matériau à la fois conducteur électrique et transparent à la longueur d'onde de fonctionnement ; ce matériau est choisi d'une épaisseur telle que les pertes optiques du faisceau se propageant dans le coeur soit minimisées ; on peut ainsi utiliser un matériau type ITO (à base d'oxyde d'étain et d'indium) ou du type SnOx (oxyde d'étain)sur des épaisseurs de 5 à 30 nm ;

- le matériau de la couche 4 est un copolymère électro-optique dont l'indice a été adapté de telle sorte qu'il soit assez proche de celui du coeur, de façon à ce qu'il participe à la propagation ; l'épaisseur de cette couche 4 est faible, notamnent de l'ordre de 0,1 à 3µm ;

- pour la couche de protection 5, le matériau utilisé peut être un matériau organique d'indice inférieur à celui du coeur et de résistivité électrique sensiblement plus faible que celle du polymère électro-optique.

- pour l'électrode supérieure 6, il suffit d'un matériau que l'on puisse déposer sur la couche de protection 5 et qui soit un conducteur électrique, comme l'or, l'aluminium, le chrome, le cuivre ou d'autres métaux ;

- le matériau de la couche 7 de recouvrement qui forme gaine optique est quant à lui un matériau d'indice inférieur à celui du coeur, par exemple en silice.

La structure de la zone de modulation est optimisée de la façon qui va maintenant être décrite. Le polymère 4 n'est étalé sur le coeur que sur une longueur "L" spécifique qui dépend de l'efficacité de l'effet électro-optique et qui ne doit pas excéder une valeur qui pénaliserait la vitesse de modulation du signal. Typiquement cette longueur "L" est comprise entre 5 et 30 mm.

La longueur "L" intervient ainsi dans la détermination de la tension nécessaire pour, selon le champ d'orientation des dipôles dans le polymère, déphasé de π l'onde polarisée. Cette tension Vπ est donnée par :

$$V\pi = \lambda.e/(L.n^3.r33.X)$$

où λ est la longueur d'onde, "e" la distance inter-électrode, r33 le coefficient électro-optique, X le facteur de recouvrement du champ optique par le champ électrique et n l'indice de réfraction du matériau électro-optique.s

C'est au début et à la fin de cette zone de longueur L, que les pertes optiques engendrées peuvent être importantes.

Pour éviter ces pertes, il est prévu des zones de transition 8 entre d'une part la zone où le polymère 4 est directement superposé à l'électrode 3, elle-même superposée au coeur 2, et d'autre part les zones de part et d'autre de cette zone de modulation, où le diélectrique de recouvrement 7 forme gaine optique et est directement superposé au coeur 2. Dans ces zones de transition 8, le diélectrique de recouvrement 7 présente une forme en biseau, avec une épaisseur qui décroît à partir des zones où il forme gaine optique jusqu'à l'électrode 3 ; le polymère 4 se prolonge au-delà de l'électrode 3 et recouvre le diélectrique 7 sur toute la cuvette définie par ces zones de transition, ainsi que sur les bords de celle-ci.

Cette forme en biseau permet au champ optique de remonter légèrement dès qu'il s'approche de la cuvette où se trouve le polymère 4 et, à l'inverse, de se recoupler dans le coeur 2 du guide quand il quitte le polymère. On évite ainsi des pertes optiques qui peuvent sinon totaliser plusieurs dB.

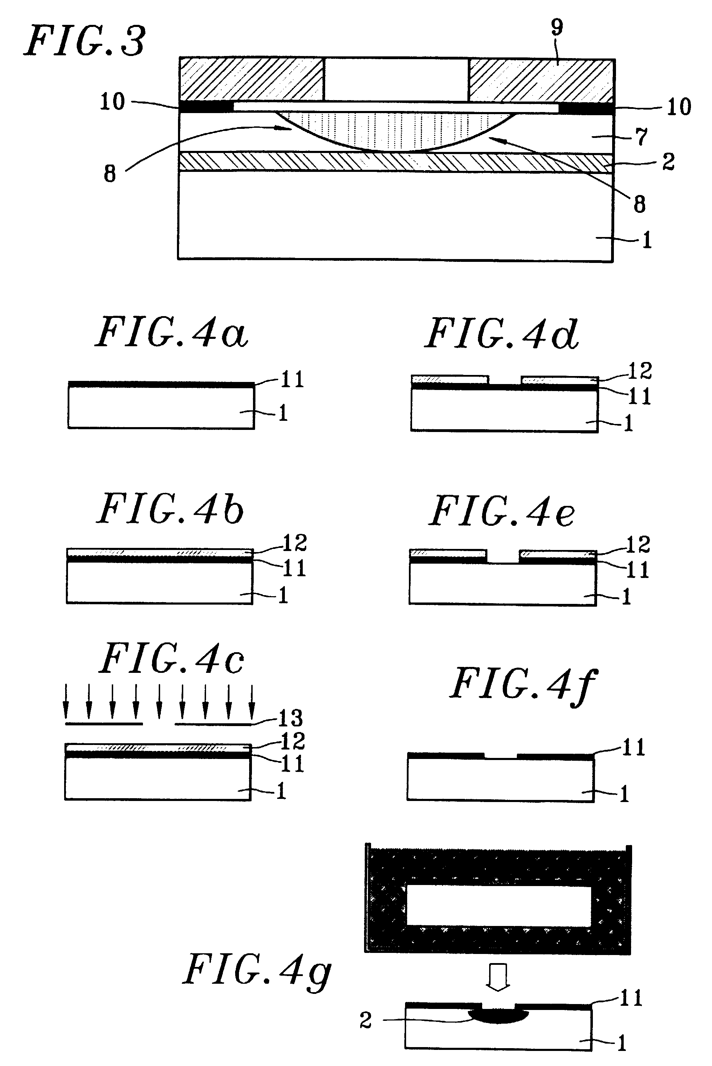

Une technique préférée permettant la réalisation des bords en biseau du diélectrique 7 est illustrée sur la figure 3.

La configuration en biseau y est obtenue lors de la gravure de la couche de diélectrique de recouvrement 7 déposée après la couche d'électrode 3.

La couche de recouvrement 7 est initialement déposée sur toute la longueur du composant, par exemple par dépôt plasma traditionnel. Pour graver cette couche et dégager ainsi une cuvette destinée à recevoir le polymère 4, on utilise un masque mécanique 9 qui va protéger la partie déposée que l'on veut conserver. Ce masque 9 au lieu d'être plaqué contre la silice de la couche de recouvrement doit être à une certaine distance de celle-ci, par exemple à une distance entre 0,2 à 200 µm. Cette distance est obtenue grâce à l'interposition de cales 10. Le plasma de gravure provoque alors un gradient d'attaque de la silice, qui lui confère la configuration en biseau souhaitée.

Sur le composant ainsi obtenu, on étale à la tournette le polymère électro-optique 4 sur des épaisseurs données précédemment, puis on dépose la couche de protection 5.

Ces couches sont ensuite gravées pour ne couvrir que la cuvette et les zones de transition 8.

On notera que plus la distance entre le masque 9 et la couche 7 est grande, plus la pente de la couche 7 au niveau de la zone de transition est douce. Les pentes douces permettent une adaptation progressive de la forme des champs (transition dite adiabatique), ce qui permet de minimiser les pertes par couplages entre les différentes parties de la structure. En outre elles permettent un remplissage facile des cuvettes par simple dépôt à la tournette.

Des détails de réalisation vont maintenant être donnés pour un exemple de composant possible.

On réalise un échange ionique en utilisant par exemple des plaques de verre de type Menzel ou d'autres verres permettant un échange ionique Na+/K+ ou encore un échange ionique Na+/Tl+. Cette préparation se fait selon les différentes étapes illustrées sur les figures 4a à 4g, à savoir

- dépôt d'une couche masquante 11 sur une couche du matériau destiné à constituer le substrat 1 (figure 4a),

- dépôt d'une couche de résine 12 sensible aux ultraviolets (figure 4b),
- insolation à travers un masque 13 qui présente une ouverture longitudinale d'une largeur correspondant à celle du coeur que l'on souhaite réaliser (figure 4c),
- développement pour retirer la portion de la résine qui a été insolée (figure 4d),
- gravure humide pour retirer la portion de la couche masquante ainsi dégagée (figure 4e),
- retrait de la résine 12 par dissolution (figure 4f),
- échange ionique dans un bain de sels fondus pour réaliser le coeur 2 (figure 4g).

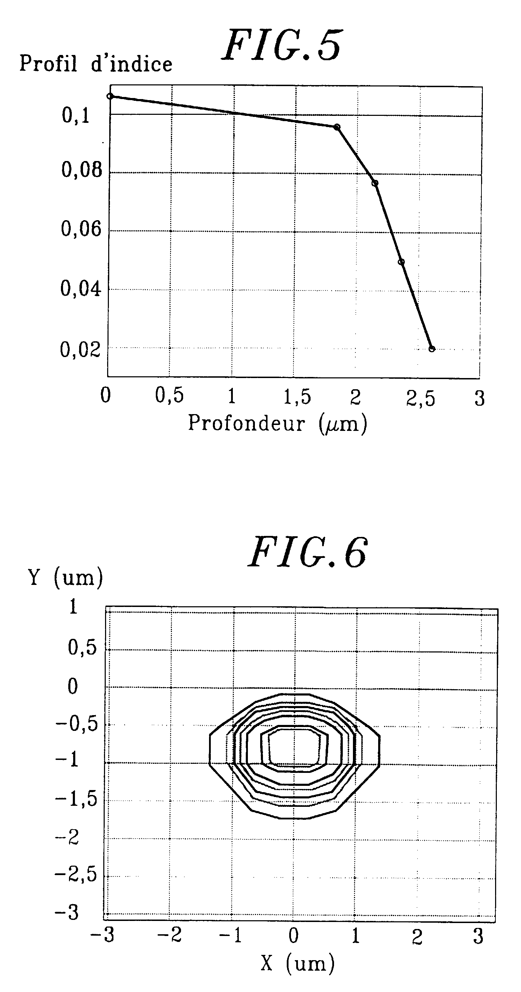

On obtient ainsi un composant à guide à coeur affleurant dont la distribution d'indice de réfraction et le profil de champ sont donnés sur les figures 5 et 6. Sur la figure 6, les abscisses et ordonnées X et Y correspondent respectivement aux directions de largeur et de profondeur du guide.

Les pertes de propagation sont de l'ordre de 0,3 dB/cm à 1,3 μm de longueur d'onde.

Les guides sont configurés en taille et indice de telle sorte qu'ils sont monomodes à 1,3 μm de longueur d'onde.

On réalise ensuite sur le composant ainsi obtenu un circuit type interféromètre Mach-Zehnder qui est dessiné sur la couche masquante 11.

Puis, on réalise, en utilisant la technique décrite en référence à la figure 3, un dépôt de silice SiO2. Cette couche sert de gaine optique 7.

Le masque 9 utilisé pour ce dépôt de silice est une plaque métallique maintenue par des cales d'épaisseur à une certaine distance de l'échantillon. La silice est obtenue par pulvérisation de silice en utilisant un plasma d'argon standard, auquel on a rajouté de l'oxygène. La longueur typique de la cuvette est de l'ordre de 1 cm, avec des zones de transition d'une longueur de l'ordre du millimètre.

On dépose ensuite sur le coeur du guide une longueur L, égale par exemple à 15 mm, de SnOx par pulvérisation à travers un masque.
Cette couche de SnOx est prolongée sur le côté, par exemple par une couche de verre 3a, pour obtenir un contact électrique et disposer ainsi de la première électrode (électrode 3). L'épaisseur de la couche est seulement de 10 nm pour ne pas provoquer de trop fortes pertes optiques.

D'autres variantes de réalisation de la cuvette sont envisageables.

En particulier, il est possible, au lieu de graver la couche en silice, de la déposer à travers un masque qui, à l'inverse du masque 9, présente une partie au dessus de la zone où le coeur 2 interragit avec la couche de polymère. De la même façon que pour le masque 9, on décale ce masque d'une certaine distance (de 0,5 à 1 mm) par rapport à la lame de verre. Le dépôt ainsi réalisé à travers ce masque a alors directement une forme en biseau.

La cuvette ainsi constituée par l'une ou l'autre des deux méthodes qui viennent d'être décrites est recouverte d'un polymère électro-optique qui est synthétisé avec des motifs latéraux constitués de chromophores azoïques aromatiques du type de ceux commercialisés sous la dénomination Disperse Red 1 par la société Sygma-Aldrich.

D'autres motifs peuvent encore être introduits lors de la synthèse de manière à adapter l'indice de réfraction du matériau électro-optique .

Préférentiellement, l'indice du polymère 4 est compris entre 1,4 et 1,7 à 1,3 μm.

Son coefficient électro-optique est supérieur à 10pμm/V.

Ce polymère est déposé dans la cuvette de SnOx au moyen d'une tournette. L'épaisseur du polymère est de 0,5 μm. La résistivité électrique de ce polymère est de l'ordre de $10^{14}$ Ω.cm. Sur ce polymère on dépose une couche tampon de colle polymérisable aux UV, destinée à constituer la couche de protection 5. Par exemple, On utilise à cet effet la colle commercialisée sous la dénomination SK9 par la société Summers Optical Co. L'indice de réfraction de cette colle à 1,3 μm est de 1,47. Sa résistivité est deux fois plus faible environ que celle du polymère électro-optique qu'elle recouvre.

Ensuite, on dépose sur cette colle, par pulvérisation à travers un masque, une couche d'aluminium d'une épaisseur de l'ordre de 200 nm destinée à constituer l'électrode 6.

Une fois cette structure terminée il convient de rendre le polymère électro-optique non centro-symétrique. Pour ce faire, on applique un champ électrique élevé entre les deux électrodes 3 et 6. Par exemple, ce champ est de l'ordre de 100 à 200 V/μm. Il est appliqué entre ces électrodes 3 et 6 pendant une première durée d'une quinzaine de minutes, pendant laquelle le polymère est maintenu à une température légèrement supérieure à sa température de transition vitreuse, soit pour l'exemple qui vient d'être décrit 80°C environ, puis à l'issue de cette première période jusqu'à ce que la structure revienne à une température ambiante proche de 20°C.

Le modulateur est alors prêt à fonctionner, le signal électrique modulant devant être appliqué entre les électrodes 3 et 6.

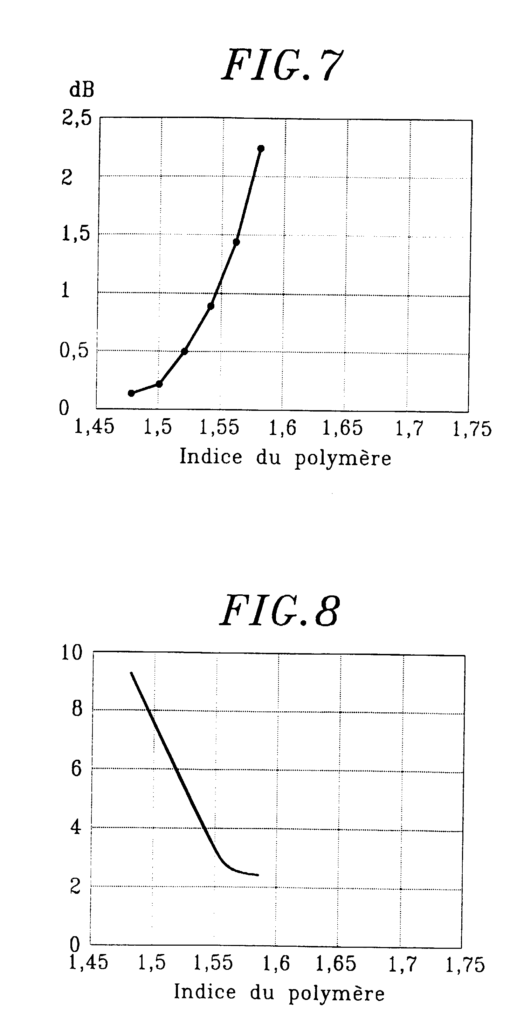

Les pertes de couplage dans la zone active sont données par la figure 7 en fonction de l'indice de la couche de polymère 4, dans le cas d'une épaisseur de 0, 5 μm pour cette couche. On remarque que pour un indice de l'ordre de 1,55, les pertes sont de l'ordre de 1 dB, ce qui est tout à fait acceptable. Avec une transition abrupte entre le polymère 4 et la couche 7, c'est à dire sans les zones de transition 8, ces pertes seraient beaucoup plus élevées (>5 dB )

La figure 8 donne, dans le cas d'une épaisseur de 0, 5 μm pour la couche 4, l'évolution de la tension de commande Vπ définie plus haut en fonction de l'indice du polymère.

**Revendications**

1. Modulateur électro-optique à effet Pockels comportant un guide optique à coeur (2) en un matériau amorphe minéral, sur lequel est superposée une structure qui comporte deux couches (3, 6) formant électrode entre lesquelles est interposé un polymère (4) électro-optique, ladite structure étant directement superposée au matériau de coeur (2) du guide optique, caractérisé en ce qu'il comporte une couche d'un matériau formant gaine optique (7) qui s'étend sur le matériau de coeur (2), de part et d'autre de la structure comportant les deux couches formant électrode et le polymère (4) électro-optique, et qui présente au voisinage de ladite structure des zones de transition (8) dans lesquelles son épaisseur décroît jusqu'à l'électrode qui est superposée au matériau de coeur (2), le polymère (4) électro-optique recouvrant ledit matériau formant gaine optique dans les zones de transition ainsi définies.

2. Modulateur selon la revendication 1, caractérisé en ce que le polymère (4) électro-optique est recouvert d'une couche de protection d'indice inférieur à celui du coeur (2).

3. Modulateur selon l'une des revendications précédentes, caractérisé en ce que l'électrode qui est superposée au coeur (2) du guide optique est en un matériau à la fois conducteur électrique et transparent à la longueur d'onde de fonctionnement.

4. Modulateur selon la revendication 3, caractérisé en ce que ledit matériau est un matériau à base d'oxyde d'étain.

5. Modulateur selon l'une des revendications précédentes, caractérisé en ce que la longueur selon laquelle la structure comportant les deux couches formant électrode et le polymère (4) électro-optique est superposée au coeur (2) est comprise entre 5 et 30 mm.

6. Procédé pour la réalisation d'un modulateur électro-optique selon l'une des revendications précédentes, caractérisé par les différentes étapes suivantes :

   - on réalise une structure qui comporte un guide optique à coeur (2) en un matériau amorphe minéral affleurant,
   - on dépose sur cette structure une couche en un matériau (7) destiné à constituer une gaine optique pour ledit coeur,
   - on grave ladite couche à travers un masque,
   - on dépose une électrode dans le fond de la zone gravée,
   - on dépose un polymère électro-optique sur cette électrode et sur les bords de la zone gravée,
   - on dépose dans la zone gravée un polymère (4) électro-optique.

7. Procédé selon la revendication 6, pour la réalisation d'un modulateur selon la revendication 2, caractérisé en ce que la gravure est réalisée par plasma et en ce qu'on écarte le masque par rapport à la gaine optique.

8. Procédé selon la revendication 7, caractérisé en ce que pour écarter le masque par rapport à la gaine optique, on dispose des cales entre ledit masque et ladite gaine.

9. Procédé selon l'une des revendications 7 ou 8, caractérisé en ce que le polymère (4) est déposé sur l'électrode et sur les zones de transition définies sur la gaine optique lors de la gravure.

10. Procédé pour la réalisation d'un modulateur électro-optique selon la revendication 3, caractérisé par les différentes étapes suivantes :

   - on réalise une structure qui comporte un guide optique à coeur en un matériau amorphe minéral affleurant,
   - on dépose par plasma, sur ladite structure, une gaine optique en interposant, au droit de la zone où est destiné à se trouver le polymère électro-optique, un masque qui présente une partie pleine au droit de ladite zone,
   - on dépose une électrode dans le fond de la cuvette ainsi obtenue,
   - on dépose un polymère électro-optique sur cette électrode et sur les bords de la cuvette.

## FIG.1

## FIG.2

*FIG.3*

*FIG.4a*

*FIG.4d*

*FIG.4b*

*FIG.4e*

*FIG.4c*

*FIG.4f*

*FIG.4g*

## FIG.5

Profil d'indice

## FIG.6

Y (um)

## FIG.7

## FIG.8

**EP 0 961 154 A1**

Office européen
des brevets

**RAPPORT DE RECHERCHE EUROPEENNE**

Numéro de la demande

EP 99 40 0760

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | GB 2 238 879 A (GEN ELECTRIC CO PLC) 12 juin 1991 (1991-06-12) * page 3, ligne 3 - ligne 12 * * page 5, ligne 25 - ligne 27 * * revendications 1,5-7; figure 2 * | 1,6 | G02F1/01 G02F1/035 |
| A | US 5 729 641 A (LAROSE GILLES ET AL) 17 mars 1998 (1998-03-17) * le document en entier; en particulier colonne 9, ligne 5 - ligne 33; figure 14 * | 1,6 | |
| A,D | HILL R A ET AL: "Polymeric in-line fiber modulator using novel processing techniques" OPTICAL FIBER COMMUNICATION (OFC) 1996, SAN JOSE, FEB. 25 - MAR. 1, 1996, vol. 2, no. CONG. 19, 25 février 1996 (1996-02-25), pages 166-167, XP000621003 OPTICAL SOCIETY OF AMERICA * le document en entier * | 1,6 | |
| | | | **DOMAINES TECHNIQUES RECHERCHES (Int.Cl.6)** |
| A,D | WILKINSON M ET AL: "Optical fibre modulator using electro-optic polymer overlay" ELECTRONICS LETTERS, 23 MAY 1991, UK, vol. 27, no. 11, pages 979-981, XP000232456 ISSN 0013-5194 * chapitre "Introduction"; figure 2 * | 1,6 | G02F |
| | -/-- | | |

Le présent rapport a été établi pour toutes les revendications

| Lieu de la recherche | Date d'achèvement de la recherche | Examinateur |
|---|---|---|
| LA HAYE | 7 juillet 1999 | Iasevoli, R |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03 82 (P04C02)

11

**Office européen des brevets**

**RAPPORT DE RECHERCHE EUROPEENNE**

Numéro de la demande

EP 99 40 0760

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A,D | FAWCETT G ET AL: "In-line fibre-optic intensity modulator using electro-optic polymer" ELECTRONICS LETTERS, 21 MAY 1992, UK, vol. 28, no. 11, pages 985-986, XP000305870 ISSN 0013-5194 * chapitre "Introduction"; figure 1 * | 1,6 | |

DOMAINES TECHNIQUES RECHERCHES (Int.Cl.6)

Le présent rapport a été établi pour toutes les revendications

| Lieu de la recherche | Date d'achèvement de la recherche | Examinateur |
|---|---|---|
| LA HAYE | 7 juillet 1999 | Iasevoli, R |

EP 0 961 154 A1

**ANNEXE AU RAPPORT DE RECHERCHE EUROPEENNE
RELATIF A LA DEMANDE DE BREVET EUROPEEN NO.**    EP 99 40 0760

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-07-1999

| Document brevet cité au rapport de recherche | Date de publication | Membre(s) de la famille de brevet(s) | Date de publication |
|---|---|---|---|
| GB 2238879 A | 12-06-1991 | AUCUN | |
| US 5729641 A | 17-03-1998 | AUCUN | |

Pour tout renseignement concernant cette annexe : voir Journal Officiel de l'Office européen des brevets. No.12/82

13